# EUROPÄISCHE PATENTSCHRIFT

(11) **EP 2 422 107 B1**
(45) Veröffentlichungstag und Bekanntmachung des Hinweises auf die Patenterteilung: **19.06.2013**
(21) Anmeldenummer: 10715698.6
(22) Anmeldetag: 16.04.2010
(51) Int. Cl.: F16D 65/14, F16D 55/38

(54) **MEHRSCHEIBENBREMSE**
MULTI-DISK BRAKE
FREIN MULTIDISQUE

(30) Priorität: 21.04.2009 DE 102009018224
(43) Veröffentlichungstag der Anmeldung: 29.02.2012
(73) Patentinhaber: KNORR-BREMSE Systeme für Nutzfahrzeuge GmbH, 80809 München (DE)
(72) Erfinder: BAUMGARTNER, Johann, 85368 Moosburg (DE); PERICEVIC, Aleksandar, 80636 München (DE)
(74) Vertreter: Mattusch, Gundula
(86) Internationale Anmeldenummer: PCT/EP2010/002341
(87) Internationale Veröffentlichungsnummer: WO 2010/121756

(56) Entgegenhaltungen:
- WO-A1-01/20188
- WO-A1-03/052286
- DE-U1- 20 018 338

## Beschreibung

Die Erfindung betrifft eine Mehrscheibenbremse, insbesondere für ein Straßenfahrzeug, nach dem Oberbegriff des Anspruchs 1.

Eine nass laufende Mehrscheibenbremse für ein Straßenfahrzeug ist in der nicht vorveröffentlichten DE 10 2008 005 434 beschrieben. Darin wird vorgeschlagen, das bei freier Fahrt entstehende Verlustmoment dieser Mehrscheibenbremse dadurch zu mindern, dass ein übergroßes Lüftspiel eingestellt wird, das bei einer bevorstehenden Bremsung bereits vor Beginn der eigentlichen Bremsbetätigung wieder auf ein normales Maß zurückgeführt wird.

Hierzu wird eine Bremsensteuerung benötigt, die dem Bremsvorgang vorauseilende Ereignisse, wie z.B. das Zurücknehmen des Gaspedals, erfasst und daraufhin die Verringerung des Lüftspiels einleitet.

Dieses Verfahren ist besonders für elektromechanisch betätigte Bremsen geeignet, da der elektromotorische Antrieb positionsgesteuert betrieben wird und damit ein exaktes Einstellen des Lüftspiels in beiden Zuständen möglich ist. Mit einer entsprechenden Anpassung der einzustellenden Position ist gleichzeitig auch eine Verschleißnachstellung möglich, so dass keine weitere Vergrößerung des Lüftspiels eintritt.

Bei einer pneumatisch betätigten Bremse, die mittels eines mit Druckluft beaufschlagten Bremszylinders betätigt wird, ist eine exakte Einstellung des vergrößerten Lüftspiels sehr schwierig. Ein konstantes Lüftspiel kann zwar mit einem üblichen Gestängesteller auch bei auftretendem Verschleiß eingehalten werden, eine situationsabhängige Einstellung von unterschiedlichen Lüftspielen, insbesondere mit mechanischen Mitteln ist nicht möglich.

Vor allem bei einer nass laufenden Mehrscheibenbremse ist eine verschleißunabhängige Vergrößerung des Lüftspiels sinnvoll, da die hohe Viskosität des zwischen den Reibflächen der Lamellen und der Bremsscheiben, also des im Lüftspalt befindlichen Öls auch bei gelöster Bremse Reibungsverluste aufgrund der inneren Reibung des Öls bewirkt, die zu einem ständig erhöhten Bremswiderstand mit einem entsprechend erhöhten Energieverbrauch beim Betrieb des Fahrzeuges führen.

Diese Reibungsverluste bilden ein dauerhaft vorhandenes und zu überwindendes Restmoment, das insbesondere abhängig ist vom Maß des Lüftspiels.

Zwar ist schon versucht worden, dieses Lüftspiel zu vergrößern, um so ein Abfließen des Öls aus dem Luftspalt zu ermöglichen, jedoch sind die vorgeschlagenen Lüftspiel-Maße für schneller fahrende Straßenfahrzeuge inakzeptabel.

Im Übrigen sind nass laufende Mehrscheibenbremsen zwar auch verschleißbehaftet, dieser Verschleiß wächst jedoch nur in etwa bis zum Betrag des vergrößerten Lüftspiels an. D.h. bei etwa 0,4 mm gewolltem vergrößertem Lüftspiel pro Reibkontakt bei freier Fahrt muss mit weiteren 0,4 mm Lüftspaltvergrößerung pro Reibkontakt durch Verschleiß gerechnet werden, wenn dieser Verschleiß nicht nachgestellt wird. Bei einem Verzicht auf eine Verschleißnachstellung gilt es im Fall einer Bremsung dieses vergrößerte Lüftspiel in kürzester Zeit zu überwinden, wenn nicht ein verzögertes Ansprechen der Bremse in Kauf genommen werden soll.

In der DE 200 18 338 U 1 ist eine gattungsgemäße Mehrscheibenbremse offenbart, mit einem über einen Bremshebel antreibbaren Übersetzungsgetriebe, mit einem Zahnrad, das in eine Innenverzahnung einer Rampenscheibe eingreift.

Der Erfindung liegt die Aufgabe zugrunde, eine Mehrscheibenbremse der gattungsgemäßen Art so weiterzuentwickeln, dass mit konstruktiv einfachen Mitteln einerseits eine ausreichende Vergrößerung des Lüftspiels bei freier Fahrt zur Vermeidung von ungewollter Restbremswirkung erreicht wird und andererseits keine verlängerte Ansprechzeit bei einer Bremsung in Kauf genommen werden muss.

Diese Aufgabe wird durch eine Mehrscheibenbremse mit den Merkmalen des Anspruchs 1 gelöst.

Durch das zwischen den Lamellen und dem Bremshebel angeordnete Übersetzungsgetriebe, das bei einer Bremsung, also bei Betätigung des Bremshebels, abtriebsseitig an einen Rampenring bzw. an ein damit verbundenes Zahnrad angreift, wird die Drehgeschwindigkeit des Rampenrings um einen bestimmten Faktor, vorzugsweise ca. 5, übersetzt, so dass ein schnelles Durchfahren des Lüftspieles gegeben ist.

Dabei ist in das Übersetzungsgetriebe im Angriffsbereich des Bremshebels eine Freilauf-Bremseneinrichtung integriert, der das Übersetzungsgetriebe außer Eingriff bringt, sobald an der Bremse eine Spannkraft wirksam wird. In diesem Moment wird die über den Bremshebel eingebrachte Betätigungskraft direkt auf ein Ritzel übertragen, das mit dem genannten Zahnrad des Rampenringes kämmt.

Durch die Erfindung ist es möglich, auch ein sehr großes Lüftspiel mit nur einem geringen Anteil am Gesamtschwenkhub des Bremshebels bzw. einem geringen Hub eines am Bremshebel angreifenden Bremszylinders und damit in sehr kurzer Zeit zu überwinden.

Bevorzugt ist das Übersetzungsgetriebe als Planetengetriebe ausgebildet, dessen Planetenräder in einem Außenring gelagert sind, in dem axial eine Abtriebswelle geführt ist, an deren einem Ende das in die Planetenräder eingreifende Sonnenrad verdrehsicher gehalten ist, während die Planetenräder andererseits in die Innenverzahnung eines gebremsten Hohlrades eingreifen.

Die Wirkung des Übersetzungsgetriebes wird an dem folgenden Beispiel veranschaulicht:

| | |
|---|---|
| Anzahl der Bremsscheiben: | 3 |
| Anzahl der Reibkontakte: | 6 |
| Lüftspiel pro Reibkontakt: | 0,4 mm |
| Gesamtlüftspiel: | 2,4 mm |

Übertragungskonstante des Rampenringes: 4,37° pro mm (d.h., der Rampenring muss um 4,37° verdreht werden, um ein Lüftspiel von 1 mm zu überwinden)
Übersetzung von Zahnrad/Rampenring auf Abtriebswelle: 6,5.

Für das gegebene Gesamtlüftspiel ergibt sich ein erforderlicher Verdrehwinkel des Rampenringes von 10,48° und 68,1° der Abtriebswelle. Mit einer Untersetzungsstufe zwischen Bremshebel und Abtriebswelle von 5 : 1 ist eine Verdrehung des Bremshebels von 13,6° notwendig. Ohne den Einsatz des Übersetzungsgetriebes wären die zuvor berechneten 68,1° Verschwenkwinkel für den Bremshebel erforderlich.

Die Funktionsweise der neuen Mehrscheibenbremse wird nachfolgend anhand der beigefügten Zeichnungen beschrieben.

Dabei zeigen:
- Figur 1: einen Teilausschnitt einer Mehrscheibenbremse in einer geschnittenen Seitenansicht
- Figur 2: eine Einzelheit der Mehrscheibenbremse in einer schematischen Vorderansicht
- Figur 3: eine weitere Einzelheit der Mehrscheibenbremse in einer Explosionsdarstellung
- Figur 4: die Einzelheit nach Figur 3 in einem Längsschnitt
- Figur 5: ein Einzelteil der Einzelheit nach Figur 4 in unterschiedlichen Ansichten.

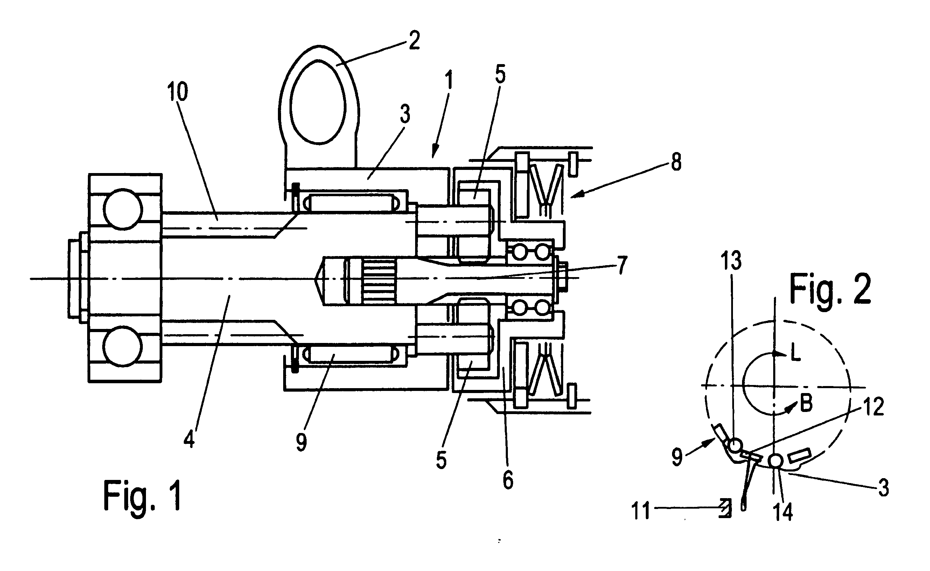

In der Figur 1 ist in einem Teilausschnitt ein Übersetzungsgetriebe 1 zur Übertragung von Zuspannkräften in einer Mehrscheibenbremse dargestellt, die parallel und abständig zueinander angeordnete, verdrehfeste Lamellen aufweist, zwischen denen jeweils eine drehbare Bremsscheibe positioniert ist.

Das Übersetzungsgetriebe 1 ist als Planetengetriebe ausgebildet und weist einen Außenring 3 auf, an dem ein Bremshebel 2 starr befestigt ist.

In dem Außenring 3 sind konzentrisch Planetenräder 5 drehbar gelagert, die in ein zentrisches Sonnenrad 7 eingreifen, das verdrehfest mit einer Abtriebswelle 4 verbunden ist.

Andererseits kämmen die Planetenräder 5 die Innenverzahnung eines Hohlrades 6, das mittels Halteeinrichtung in Form einer Haltebremse 8 innerhalb eines bestimmten Drehmomentbereichs verdrehsicher gehalten wird.

Gegenüberliegend ist an der Abtriebswelle 4 ein Ritzel 10 angeordnet, das mit einem nicht dargestellten Zahnrad eines Rampenringes in Eingriff steht, über den die Lamellen gegen die Bremsscheiben pressbar sind.

Der Außenring 3 ist über eine Freilauf-Bremseneinrichtung 9 auf der Abtriebswelle 4 verschwenkbar gelagert, wobei die Freilauf-Bremseneinrichtung 9, entsprechend der Figur 2 eine Vielzahl von Wälzkörpern 13 aufweist, die in einem Wälzkörperkäfig 12 gehalten sind.

Bei einer Betätigung des Bremshebels 2 wird der Außenring 3 verdreht, wobei die Drehbewegung über das Übersetzungsgetriebe 1 auf die Abtriebswelle 4 übertragen wird.

Dabei werden die Planetenräder 5 vom Außenring 3 angetrieben und durch Eingriff in das Sonnenrad 7 die Abtriebswelle entsprechend gedreht. Das Übersetzungsgetriebe 1 weist eine Übersetzung auf, durch die die Abtriebswelle 4 schneller verdreht wird als der Außenring 3 und zwar in die nicht sperrende Richtung der Freilauf-Bremseneinrichtung 9, quasi unter dem Außenring 3 hindurch.

Wie erwähnt, betätigt die Abtriebswelle 4 über das Ritzel 10 den Rampenring, wodurch ein ebenfalls nicht dargestellter Betätigungsring gegen eine erste, verdrehfest gehaltene Lamelle gedrückt wird, die durch Verschieben das Lüftspiel an allen Reibkontaktflächen überwindet.

Im Lüftspielbereich ist als Gegenkraft lediglich die Kraft von Rückstellfedern zu überwinden, die zwischen den einzelnen Lamellen angeordnet sind.

Sobald alle Reibflächen der Lamellen in Kontakt mit den zugeordneten Bremsscheiben gebracht sind, beginnt der Spannkraftaufbau.

Nun steigt auch das zu übertragende Abtriebsdrehmoment so stark an, dass die am Hohlrad 6 wirkende, definiert begrenzte Haltekraft der Haltebremse 8 überwunden wird und das Hohlrad durchrutscht.

In dieser Stellung greift die Freilauf-Bremseneinrichtung 9, mit der Folge, dass die Abtriebswelle unmittelbar vom Bremshebel 2 über den Außenring 3 durch die Klemmwirkung der Freilauf-Bremseneinrichtung 9 zur weiteren Erhöhung der Spannkraft angetrieben wird.

Bei einem Zurücknehmen des Betätigungsdrucks in einem auf den Bremshebel 2 wirkenden Bremszylinder werden die Lamellen entspannt und der Bremshebel 2 durch die Abtriebswelle 4 zurückbewegt.

Die Übertragung der Rückstellbewegung auf den Bremshebel 2 erfolgt dabei direkt, da die Freilauf-Bremseneinrichtung 9 bei dieser Rückwärtsbewegung in seiner Klemmrichtung wirkt.

Bei Erreichen eines spannkraftfreien Zustands wirkt noch die Kraft der Rückstellfeder der Lamellen, die den Bremshebel 2 weiter zurück verschwenkt.

Da das Übersetzungsgetriebe 1 in dieser Position nicht aktiviert ist, würde bei Erreichen der Ausgangsposition des Bremshebels 2 nur ein sehr geringes Lüftspiel eingestellt oder, bei starkem Verschleiß, die Bremse nicht vollständig gelöst.

Es ist deshalb erforderlich, das Übersetzungsgetriebe 1 durch Aufhebung der Klemmwirkung der Freilauf-Bremseneinrichtung 9 zu aktivieren. Dies erfolgt dadurch, dass kurz vor Erreichen der Ausgangsstellung des Bremshebels 2 der die Wälzkörper 13 der Freilauf-Bremseneinrichtung 9 führende Käfig 12 durch einen Anschlag 11 an einer weiteren Drehung gehindert wird und dabei die Wälzkörper 13 aus ihrer Klemmposition abwärts von Rampen 17 herausbewegt werden.

In dieser Position ist keine direkte Kraftübertragung von der Abtriebswelle 4 auf den Außenring 3 gegeben, so dass die Drehbewegung der Abtriebswelle über das Übersetzungsgetriebe 1 übertragen und der Bremshebel 2 vollständig in seine Ausgangsposition zurückbewegt wird.

Je nach Verschleißzustand der Reibflächen der Lamellen bzw. der Bremsscheiben, hat der Rampenring noch nicht seine Ausgangsposition erreicht. Hierzu muss das am Hohlrad 6 wirkende Reaktions-Drehmoment groß genug sein, um das Hohlrad 6 gegen die wirkende Haltekraft der Haltebremse 8 zu verdrehen.

Zu diesem Zweck ist es erforderlich, dass die Bremskraft der Haltebremse 8 in Rückwärtsdrehrichtung geringer ist als in Vorwärtsdrehrichtung. Dies wird dadurch erreicht, dass die Haltebremse 8 einsinnig selbstverstärkend ausgelegt ist, beispielsweise in Form einer federbelasteten Bandbremse, einer Duo- oder Servo-Trommelbremse oder einer mit Verstärkungsrampen ausgestatteten Scheibenbremse. Mit der in diesem Sinne ausgebildeten Haltebremse 8 wird nun die in Rückstell-Drehrichtung am Hohlrad 6 wirkende geringere Haltekraft problemlos überwunden und der Rampenring durch die Kraft der Rückstellfeder vollständig in seine Ausgangsstellung zurückbewegt.

Statt als Haltebremse 8 kann die Halteeinrichtung im Sinne einer Kugelrampenkupplung ausgebildet sein, die im Gegensatz zu einer Reibbremse nahezu verschleißfrei fungiert.

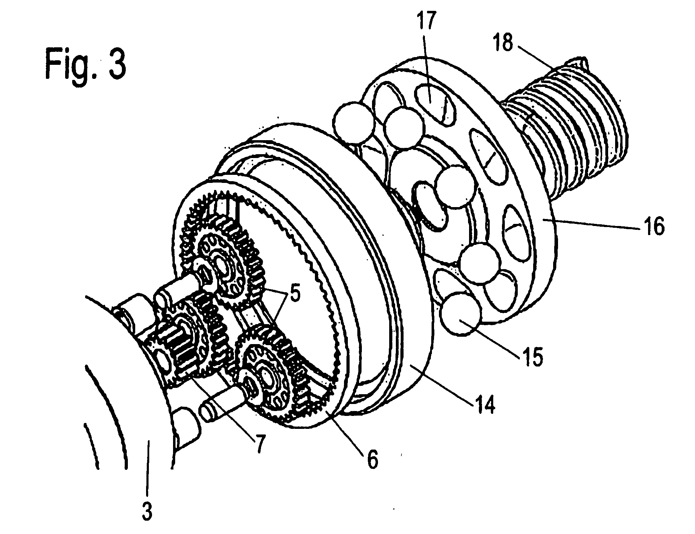

Eine solche Halteeinrichtung ist in den Figuren 3 bis 5 dargestellt. Im Wesentlichen besteht die Halteeinrichtung aus zwei Rampenscheiben 14, 16, zwischen denen Kugeln 15 gelagert sind, wobei an der Rampenscheibe 14 auf der den Kugeln 15 gegenüberliegenden Seite das Hohlrad 6 des Übersetzungsgetriebes 1 verdrehsicher gehalten ist.

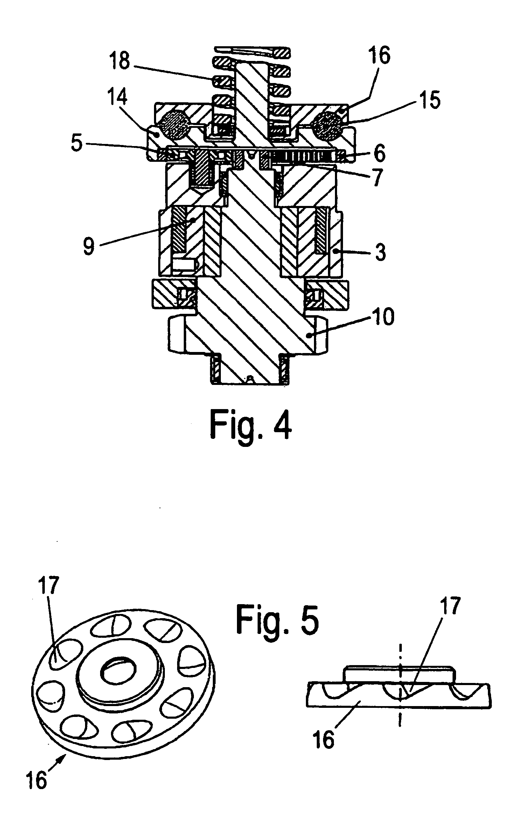

Bei einem Verschwenken des an den Außenring 3 angeschlossenen Bremshebels 2 (Figur 1) zum Zuspannen der Bremse, werden die Planetenräder 5 angetrieben. Das Hohlrad 6 stützt sich über die Kugeln 15 an der Rampenscheibe 16 ab, die axial über eine Druckfeder 18 vorgespannt und in einem nicht dargestellten Gehäuse verdrehfest, jedoch axial verschiebbar gehalten ist, so dass sich durch die Druckkraft der Feder und die Steigung von Rampen 17 (Figur 5) ein Grenzdrehmoment ergibt, das aufgebracht werden muss, um die Rampenscheibe 14 zusammen mit dem Hohlrad 6 zu verdrehen.

Nach einem Überschreiten dieses Drehmoments, d.h., nach Überwindung des Lüftspiels der Bremse, erfolgt der Abtrieb vom Bremshebel 2 direkt über die Freilauf-bremseinrichtung 9. Dabei verdreht sich die Rampenscheibe 14 und die Kugeln 2 bewegen sich entlang der Rampen 17.

Diese Bewegung führt zu einer Axialbewegung der Rampenscheibe 16, wodurch die Druckfeder 18 weiter gespannt wird. Allerdings würde dies zu einer Erhöhung des Grenzdrehmoments führen.

Um dies zu verhindern, sind die Rampen 17 so ausgebildet, dass der Steigungswinkel mit der Verdrehung der Kugeln 15 abnimmt. Dadurch wird gewährleistet, dass das Grenzdrehmoment nahezu konstant bleibt.

Die Länge der Rampen 17 wird durch die Steifigkeit der Bremsmechanik und damit dem Schwenkhub des Bremshebels 2 bestimmt, der erforderlich ist, um die Bremskraft aufzubauen.

Eine Rückstellung des Hohlrades 6 bei einem Lösen der Bremsen erfolgt selbsttätig über die vorgespannte Druckfeder 18.

### Bezugszeichenliste

| | |
|---|---|
| 1 | Übersetzungsgetriebe |
| 2 | Bremshebel |
| 3 | Außenring |
| 4 | Abtriebswelle |
| 5 | Planetenräder |
| 6 | Hohlrad |
| 7 | Sonnenrad |
| 8 | Haltebremse |
| 9 | Freilauf-Bremseinrichtung |
| 10 | Ritzel |
| 11 | Anschlag |
| 12 | Wälzkörperkäfig |
| 13 | Wälzkörper |
| 14 | Rampenscheibe |
| 15 | Kugel |
| 16 | Rampenscheibe |
| 17 | Rampe |
| 18 | Druckfeder |

## Patentansprüche

1. Mehrscheibenbremse, insbesondere für ein Straßenfahrzeug, mit parallel und abständig zueinander angeordneten, verdrehfesten Lamellen, zwischen denen jeweils eine drehbare Bremsscheibe positioniert ist, wobei bei einer Bremsung mittels einer Zuspanneinrichtung die sich radial erstreckenden Lamellen und Bremsscheiben unter Überwindung eines Lüftspiels gegeneinander pressbar und nach einem Lösen der Bremse unter Bildung des Lüftspiels voneinander trennbar sind, wobei zur Übertragung der Zustellbewegung bei einer Bremsung ein Übersetzungsgetriebe (1) vorgesehen ist, das einerseits bewegungsabhängig an einem schwenkbaren Bremshebel (2) der Zuspanneinrichtung angeschlossen ist und andererseits mit den Lamellen in Wirkverbindung steht, **dadurch gekennzeichnet, dass** das Übersetzungsgetriebe (1) eine Abtriebswelle (4) aufweist, an der ein Außenring (3) gelagert ist, an dem der Bremshebel (2) befestigt ist, wobei zwischen dem Außenring (3) und der Abtriebswelle (4) eine Freilauf-Bremseneinrichtung (9) angeordnet ist.

2. Mehrscheibenbremse nach Anspruch 1, **dadurch gekennzeichnet, dass** das Übersetzungsgetriebe (1) als Planetengetriebe ausgebildet ist.

3. Mehrscheibenbremse nach Anspruch 1 oder 2, **dadurch gekennzeichnet, dass** das Übersetzungsgetriebe (1) konzentrisch angeordnete Planetenräder (5) aufweist, die an dem Außenring drehbar gelagert sind und die mit einem zentralen Sonnenrad (7), das mit der Abtriebswelle (4) verbunden ist, in Eingriff stehen.

4. Mehrscheibenbremse nach Anspruch 3, **dadurch gekennzeichnet, dass** die Planetenräder (5) mit der Innenverzahnung eines Hohlrades (6) kämmen.

5. Mehrscheibenbremse nach Anspruch 4, **dadurch gekennzeichnet, dass** das Hohlrad (6) drehmomentabhängig durch eine Halteeinrichtung gehalten ist.

6. Mehrscheibenbremse nach einem der vorhergehenden Ansprüche, **dadurch gekennzeichnet, dass** die Abtriebswelle (4) auf ihrer dem Übersetzungsgetriebe (1) abgewandten Seite mit einem Ritzel (10) versehen ist, das in ein Zahnrad eingreift, mit dem ein Rampenring gegen eine zugeordnete Lamelle drückbar ist.

7. Mehrscheibenbremse nach einem der vorhergehenden Ansprüche, **dadurch gekennzeichnet, dass** die Freilauf-Bremseneinrichtung (9) einen Freilaufkäfig (12) aufweist, in dem Wälzkörper (13) gehalten sind und der nach einer Verdrehung um einen bestimmten Schwenkwinkel an einen Anschlag (11) des Außenringes (3) anlegbar ist.

8. Mehrscheibenbremse nach einem der Ansprüche 5 bis 7, **dadurch gekennzeichnet, dass** die Haltekraft der Halteeinrichtung bei Verschwenken des Bremshebels (2) in Zuspannrichtung größer ist als in Entspannungsrichtung.

9. Mehrscheibenbremse nach einem der Ansprüche 5 bis 8, **dadurch gekennzeichnet, dass** die Halteeinrichtung als einsinnig selbstverstärkend ausgebildet ist.

10. Mehrscheibenbremse nach einem der Ansprüche 5 bis 9, **dadurch gekennzeichnet, dass** die Halteeinrichtung als Haltebremse (8) ausgebildet ist.

11. Mehrscheibenbremse nach Anspruch 10, **dadurch gekennzeichnet, dass** die Haltebremse (8) als federbelastete Bandbremse, Duo- oder Servo-Trommelbremse oder als mit Verstärkungsrampen ausgestattete Scheibenbremse ausgebildet ist.

12. Mehrscheibenbremse nach einem der Ansprüche 5 bis 11, **dadurch gekennzeichnet, dass** die Halteeinrichtung im Sinne einer Kugelrampenkupplung ausgebildet ist, mit zwei relativ zueinander verdrehbaren Rampenscheiben (14, 16), von denen mindestens eine mit Rampen (17) versehen ist, in denen Kugeln abrollbar positioniert sind, die sich andererseits an der anderen Rampenscheibe (14, 16) abstützen.

13. Mehrscheibenbremse nach Anspruch 12, **dadurch gekennzeichnet, dass** der Neigungswinkel der Rampen (17) mit deren zunehmender Länge verringert ist.

## Claims

1. A multi-disc brake, in particular for a road vehicle, having plates fixed against rotation, which are arranged parallel to and at a distance from each other and between which in each case one rotatable brake disc is positioned, wherein the radially extending plates and brake discs can be pressed against one another during a braking operation, by means of a brake application device, while overcoming a release clearance and, once the brake is released, the plates can be separated from each other, thereby forming a release clearance, wherein a transmission (1) is provided for transmitting the feed motion during a braking operation, said transmission on the one hand being connected in a movement-dependent manner to a pivotable brake lever (2) of the brake application device and on the other hand being operatively connected to the plates,
**characterised in that** the transmission (1) has an output shaft (4), on which is supported an outer ring (3), to which the brake lever (2) is attached, wherein a one-way clutch braking device (9) is arranged between the outer ring (3) and the output shaft (4).

2. The multi-disc brake as claimed in claim 1, **characterised in that** the transmission (1) is designed as a planetary transmission.

3. The multi-disc brake as claimed in claim 1 or 2, **characterised in that** the transmission (1) has concentrically arranged planet wheels (5), which are rotatably supported on the outer ring and are in engagement with a central sun wheel (7), which is connected to the output shaft (4).

4. The multi-disc brake as claimed in claim 3, **characterised in that** the planet wheels (5) mesh with the internal toothing of an annulus (6).

5. The multi-disc brake as claimed in claim 4, **characterised in that** the annulus (6) is held by a holding device in a torque-dependent manner.

6. The multi-disc brake as claimed in one of the preceding claims, **characterised in that** the output shaft (4) is provided on its end remote from the transmission (1) with a pinion (10) which engages in a gearwheel, by means of which a ramp ring can be pressed against an associated plate.

7. The multi-disc brake as claimed in one of the preceding claims, **characterised in that** the one-way clutch braking device (9) has a one-way clutch cage (12), in which rolling elements (13) are held and which can be brought up against a stop (11) on the outer ring (3) after turning through a particular pivoting angle.

8. The multi-disc brake as claimed in one of the claims 5 to 7, **characterised in that** the holding force of the holding device as the brake lever (2) is pivoted is greater in the brake application direction than in the release direction.

9. The multi-disc brake as claimed in one of claims 5 to 8, **characterised in that** the holding device is designed to be self-energising in one direction.

10. The multi-disc brake as claimed in one of the claims 5 to 9, **characterised in that** the holding device is designed as a holding brake (8).

11. The multi-disc brake as claimed in claim 10, **characterised in that** the holding brake (8) is designed as a spring-loaded band brake, a duo- or servo-drum brake or as a disc brake fitted with energising ramps.

12. The multi-disc brake as claimed in one of the claims 5 to 11, **characterised in that** the holding device is designed in the form of a ball ramp clutch, having two ramp discs (14, 16), which can be turned relative to one another and of which at least one is provided with ramps (17), in which balls are positioned in such a way that they can roll, the balls being supported on the other side on the other ramp disc (14, 16).

13. The multi-disc brake as claimed in claim 12, **characterised in that** the angle of inclination of the ramps (17) decreases as the length of said ramps increases.

## Revendications

1. Frein multidisque, en particulier pour un véhicule routier, comprenant des lamelles fixées contra la torsion, en arrangement parallèle et aux écarts l'une de l'autre, entre lesquelles un disque de frein rotatif respectif est positionné, dans lequel au cas d'une opération de freinage lesdites lamelles, qui s'étendent en sens radial, et lesdites disques de frein sont aptes à être pressé l'une contre l'autre, en franchissant un jeu d'aération, et détaché l'une de l'autre, en formant un jeu d'aération, moyennant un dispositif de serrage, dans lequel un engrenage de transmission (1) est disposé pour la transmission du mouvement de serrage au cours d'une opération de freinage, qui, d'un côté, est relié à un levier de frein (2) pivotable dudit dispositif de serrage d'une façon dépendante du mouvement et, d'autre côté, se trouve en connexion opérative avec lesdites lamelles, **caractérisé en ce que** ledit engrenage de transmission (1) comprend un arbre de sortie (4), auquel est logé une bague extérieure (3), à laquelle est fixé ledit levier de frein (2), dans lequel un dispositif de freinage à roue libre (9) est disposé entre ladite bague extérieure (3) et ledit arbre de sortie (4).

2. Frein multidisque selon la revendication 1, **caractérisé en ce que** ledit engrenage de transmission (1) est configuré sous forme d'une boîte à engrenages planétaires.

3. Frein multidisque selon la revendication 1 ou 2, **caractérisé en ce que** ledit engrenage de transmission (1) comprend des roues planétaires (5) en arrangement concentrique, qui sont logées de manière rotative à ladite bague extérieure et qui se trouvent en prise dans une roue solaire raccordée audit arbre de sortie (4).

4. Frein multidisque selon la revendication 3, **caractérisé en ce que** lesdites roues planétaires (5) s'engrènent avec la denture intérieure d'une couronne de train planétaire (6).

5. Frein multidisque selon la revendication 4, **caractérisé en ce que** ladite couronne de train planétaire (6) est tenue par un dispositif de rétention en dépendance d'un couple.

6. Frein multidisque selon une quelconque des revendications précédentes, **caractérisé en ce que** ledit arbre de sortie (4) est muni d'un pignon (10) à son côté opposé audit engrenage de transmission (1), lequel se trouve en prise dans une roue dentée qui sert à presser une bague à rampe contre une lamelle y affectée.

7. Frein multidisque selon une quelconque des revendications précédentes, **caractérisé en ce que** ledit dispositif de freinage à roue libre (9) comprend une cage à roue libre (12), dans lequel des corps roulants (13) sont retenus et qui est apte à porter contre une butée (11) de ladite bague extérieure (3) après une torsion par un angle de basculement déterminé.

8. Frein multidisque selon une quelconque des revendications 5 à 7, **caractérisé en ce que** la force de rétention dudit dispositif de rétention au basculement dudit levier de frein (2) en sens de serrage est plus grande que la force en sens de desserrage.

9. Frein multidisque selon une quelconque des revendications 5 à 8, **caractérisé en ce que** ledit dispositif de rétention est configuré en tant que dispositif auto renforçateur en un seul sens.

10. Frein multidisque selon une quelconque des revendications 5 à 9, **caractérisé en ce que** ledit dispositif de rétention est configuré en tant que frein d'arrêt (8).

11. Frein multidisque selon la revendication 10, **caractérisé en ce que** ledit frein d'arrêt (8) est configuré sous forme d'un frein à ruban, d'un frein à tambour duo ou assisté ou en tant qu'un frein à disque muni des rampes renforçatrices.

12. Frein multidisque selon une quelconque des revendications 5 à 11, **caractérisé en ce que** ledit dispositif de rétention est configuré en sens d'un coupleur à rampe de billes, à deux disque de rampe (14, 16) aptes à être contourné l'un relativement à l'autre, dont au moins un est muni des rampes (17) dans lesquelles des billes sont positionnées pour roulement, qui s'appuient, d'autre côté, à l'autre disque de rampe (14, 16).

13. Frein multidisque selon la revendication 12, **caractérisé en ce que** l'angle d'inclinaison desdites rampes (17) est progressivement réduit, le plus s'augmente leur longueur.
